(19) **Europäisches Patentamt / European Patent Office / Office européen des brevets**

(11) **EP 2 720 232 A1**

(12) **EUROPEAN PATENT APPLICATION**
published in accordance with Art. 153(4) EPC

(43) Date of publication:
**16.04.2014 Bulletin 2014/16**

(21) Application number: **12797115.8**

(22) Date of filing: **25.05.2012**

(51) Int Cl.:
$H01B\ 3/22^{(2006.01)}$    $C10M\ 105/06^{(2006.01)}$
$C10M\ 129/18^{(2006.01)}$    $C10N\ 20/00^{(2006.01)}$
$C10N\ 20/02^{(2006.01)}$    $C10N\ 30/02^{(2006.01)}$
$C10N\ 30/08^{(2006.01)}$    $C10N\ 40/16^{(2006.01)}$

(86) International application number:
**PCT/JP2012/063445**

(87) International publication number:
**WO 2012/169372 (13.12.2012 Gazette 2012/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2011 JP 2011127597**

(71) Applicant: **JX Nippon Oil & Energy Corporation Chiyoda-ku Tokyo 100-8162 (JP)**

(72) Inventors:
• **KIMURA, Nobuhiro Tokyo 100-8162 (JP)**

• **HOSHINO, Hiroyuki Tokyo 100-8162 (JP)**
• **KAWAGUCHI, Takahiro Tokyo 100-8162 (JP)**
• **TAKAKI, Mikihiro Tokyo 100-8162 (JP)**
• **IIZUKA, Minoru Tokyo 100-8162 (JP)**

(74) Representative: **Elend, Almut Susanne et al Venner Shipley LLP Byron House Cambridge Business Park Cowley Road Cambridge, Cambridgeshire CB4 0WZ (GB)**

(54) **ELECTRICALLY INSULATING OIL COMPOSITION HAVING EXCELLENT LOW-TEMPERATURE PROPERTIES**

(57) The present invention provides an electric insulating oil composition that has excellent low temperature properties, hydrogen gas absorbability and giving less adverse effect on living bodies and comprises [A] 1, 1-diphenylethane in an amount of 30 to 70 percent by mass, [B] at least one or more component selected from 4 components that are (a) 1-phenyl-1-methylphenylethane, (b) 1-phenyl-1-xylylethane, (c) 1-phenyl-1-ethylphenylethane and (d) benzyltoluene in a total amount of 30 to 70 percent by mass, and [C] 1,2-diphenylethane in an amount of 0.1 to 2 percent by mass and/or diphenylmethane in an amount of 0.1 to 13 percent by mass.

EP 2 720 232 A1

**Description**

**Technical Field**

The present invention relates to electrical insulating oils comprising a diarylalkane mixture and having excellent low temperature properties.

**Background Art**

Examples of properties that an electrical insulating oil is mainly required to have to be excellent in low temperature properties include high breakdown voltage, high hydrogen gas absorbability, low viscosity and low melting point. In recent years, electrical insulating oil with a high breakdown voltage are being used worldwide. Unlike the past years, an electrical insulating oil having such excellent low temperature properties that make it possible to be used in extremely low temperature districts where such an oil has never been used before has been demanded arising from economic growth and has been required to have such properties that do not cause the production of solid at -50°C or lower. It is known that if solids are produced in an electrical insulating oil during the use thereof, discharge is likely to occur from the solidified portions. Therefore, an electrical insulating oil from which some components are likely to precipitate as solids under this environment cannot be used.

Patent Literature 1 (Japanese Patent Application Laid-Open Publication No. 7-226332) discloses a method for improving the low temperature properties of an electrical insulating oil containing an C14 to C16 aromatic hydrocarbon oil having two condensed or non-condensed type benzene rings by blending a natural fatty acid triglyceride with a freezing point of 5°C or lower. However, this method can improve the low temperature properties to some extent but impairs the breakdown voltage of the aromatic hydrocarbon oil having two benzene rings due to the low breakdown voltage of the natural fatty acid triglyceride.

Over a long period of time, a mixture of benzyltoluene and dibenzyltoluene has been used as an electrical insulating oil with a high breakdown voltage. Although benzyltoluene is high in aromatic carbon ratio per molecule, high in hydrogen gas absorbability and excellent in withstand voltage characteristic, according to some literatures, the melting points of 3 types of positional isomer of benzyltoluene, i.e., o-isomer, m-isomer and p-isomer are +6.6°C, -27.8°C and +4.6°C, respectively, and thus cannot be deemed low.

In order to solve such problems, Patent Literature 2 (Japanese Patent Application Laid-Open Publication No. 60-87231) has proposed to mix benzyltoluene produced by reacting toluene and benzyl chloride with a ferric chloride catalyst with dibenzyltoluene that is a coproduct. ARKEMA has commercialized an electrical insulating oil composition under the name of "JARYLEC C-101" which is the same in technical sense as the proposal of Patent Literature 2. Patent Literature 2 discloses an oligomer mixture of triarylmethane, which is, however, substantially a mixture of benzyltoluene and dibenzyltoluene. Patent Literature 2 describes at page 3 "monobenzyltoluene has a defect that it crystallizes at -20°C after supercooling" and therefore, the composition is produced by mixing dibenzyltoluene to restrain the crystallization.

However, addition of compounds such as dibenzyltoluene is not a good measure for the following three reasons. That is, even though the freezing point depression could be expected by addition of dibenzyltoluene, it is not decreased as much as the mass of the addition of dibenzyltoluene due to the high molecular weight thereof. The freezing point depression is occurred proportionally to the mol concentration of the material to be added, but with the amount of dibenzyltoluene in the order of 20 percent by mass as added in the above-described product JARYLEC C-101, the crystallization temperature can be decreased only by 6 to 8°C when calculated from the mol concentration.

Secondly, dibenzyltoluene merely increases the viscosity of an insulating oil and thus decreases the mobility of the solution molecules thereby apparently restrains the oil from precipitating. Therefore, the precipitation of the oil as crystals can be found if carefully cooling the oil.

The third reason is that dibenzyltoluene has high biological accumulation properties. In recent years, Stockholm Convention or the like has started to impose an international restriction on substances having a high toxicity. Although no such a restriction has been imposed on dibenzyltoluene itself, it has been designated as Type I Monitoring Chemical Substance in Japan due to its high biological accumulation properties. The use of this substance is allowed in the form of essential use where the purposes of use are restricted, but from now, tightening of regulations on the high toxicity substances is inevitable, and thus alternative materials with a low toxicity have been demanded.

On the other hand, 1-phenyl-1-xylylethane or 1-phenyl-1-ethylphenylethane is easily produced and has excellent properties such as relatively high breakdown voltage and small dielectric loss and thus have been widely used. For example, a composition comprising 1-phenyl-1-(2,4-dimethylphenyl)ethane or 1-phenyl-1-(2,5-dimethylphenyl)ethane has been proposed as an electrical insulating oil composition which is excellent in breakdown voltage and dielectric loss and also particularly excellent in oxidation stability (Patent Literature 3: Japanese Patent Application Laid-Open Publication No. 57-50708).

However, an electrical insulating oil composition comprising 1-phenyl-1-xylylethane or 1-phenyl-1-ethylphenylethane has a pour point of -47.5°C or lower and a very low melting point but has a problem that it is not sufficient in insulation properties for a capacitor in particular in a low temperature range of 0°C or lower because its 40°C viscosity is in the order of 5.0 mm$^2$/s, which is high.

Meanwhile, 1,1-diphenylethane is high in breakdown voltage and hydrogen gas absorbability and has a 40°C viscosity of 2.8 mm$^2$/s and a freezing point of -18°C, which is low and thus is a potential substance for an electrical insulating oil with an excellent low temperature properties. Although 1,1-diphenylethane is low in freezing point, it cannot be used alone in a temperature region of -50°C or lower.

## Citation List

## Patent Literature

Patent Literature 1: Japanese Patent Application Laid-Open Publication No. 7-226332
Patent Literature 2: Japanese Patent Application Laid-Open Publication No. 60-87231
Patent Literature 3: Japanese Patent Application Laid-Open Publication No. 57-50708

## Summary of Invention

## Technical Problem

The present invention has an object to provide an electrical insulating oil composition that can maintain breakdown voltage at a high level, extremely unlikely precipitates as crystals in particular at -50°C, and has excellent low temperature properties.

## Solution to Problem

As the result of extensive studies and researches carried out to solve the above-described problems, the present invention has been accomplished on the basis of the finding that the problems was able to be solved with a diarylalkane mixture produced by adding at least one or more types selected from 1-phenyl-1-methylphenylethane, 1-phenyl-1-xylylethane, 1-phenyl-1-ethylphenylethane and benzyltoluene in a given amount to 1,1-diphenylethane and further adding thereto 1,2-diphenylethane and/or diphenylmethane in a given amount.

That is, the present invention relates to an electrical insulating oil composition comprising [A] 1,1-diphenylethane in an amount of 30 to 70 percent by mass, [B] at least one or more component selected from 4 components that are (a) 1-phenyl-1-methylphenylethane, (b) 1-phenyl-1-xylylethane, (c) 1-phenyl-1-ethylphenylethane and (d) benzyltoluene in a total amount of 30 to 70 percent by mass and [C] 1,2-diphenylethane in an amount of 0.1 to 2 percent by mass and/or diphenylmethane in an amount of 0.1 to 13 percent by mass.

The present invention also relates to an electrical insulating oil composition comprising [A] 1,1-diphenylethane in an amount of 30 to 70 percent by mass, [B] at least one or more component selected from 3 components that are (a) 1-phenyl-1-methylphenylethane, (b) 1-phenyl-1-xylylethane and (c) 1-phenyl-1-ethylphenylethane in a total amount of 30 to 70 percent by mass and [C] 1,2-diphenylethane in an amount of 0.1 to 2 percent by mass and/or diphenylmethane in an amount of 0.1 to 13 percent by mass.

The present invention also relates to an electrical insulating oil composition comprising [A] 1,1-diphenylethane in an amount of 30 to 70 percent by mass, [B] (a) 1-phenyl-1-methylphenylethane in an amount of 30 to 70 percent by mass and [C] 1,2-diphenylethane in an amount of 0.1 to 2 percent by mass and/or diphenylmethane in an amount of 0.1 to 13 percent by mass.

The present invention also relates to the aforesaid electrical insulating oil composition wherein it has a 40°C kinematic viscosity of 4.5 mm$^2$/s or lower.

The present invention also relates to the aforesaid electrical insulating oil composition wherein the chlorine content is less than 50 mass ppm.

The present invention also relates to an electrical insulating oil composition wherein the aforesaid electrical insulating oil composition is brought into contact with an activated earth, followed by addition of 0.01 to 1.0 percent by mass of an epoxy compound.

**Advantageous Effect of Invention**

The electrical insulating oil composition of the present invention comprises a blend of a plurality of specific components in specific proportions, resulting in an electrical insulating oil composition that extremely unlikely precipitates as crystals and has excellent low temperature properties that enables an oil-impregnated capacitor impregnated with the composition to be practically used at a low temperature of -50°C. Furthermore, the above-described bicyclic aromatic hydrocarbons blended in the electrical insulating oil composition are excellent in hydrogen gas absorbability and withstand voltage characteristic. The electrical insulating oil composition of the present invention comprises components, each of which does not adversely affect living bodies. Therefore, the composition of the present invention is a practically excellent electrical insulating oil composition for use in impregnating capacitors.

**Description of Embodiments**

The present invention will be described in more detail below.

The electrical insulating oil composition of the present invention is a diarylalkane mixture comprising [A] 1, 1-diphenylethane blended with [B] at least one or more type selected from 1-phenyl-1-methylphenylethane, 1-phenyl-1-xylylethane, 1-phenyl-1-ethylphenylethane and benzyltoluene and [C] 1,2-diphenylethane and/or diphenylmethane, in given amounts.

Although benzyltoluene is high in hydrogen gas absorbability and low in viscosity, it is not satisfactory for use at -50°C because the melting points of the o-isomer, m-isomer and p-isomer are +6.6°C, -27.8°C and +4.6°C, respectively, as described above.

Basically, 1-phenyl-1-xylylethane and 1-phenyl-1-ethylphenylethane are produced by aralkylation of styrene and C8 aromatic hydrocarbons and thus are generally mixtures thereof (see, for example, Japanese Patent Application Laid-Open Publication No. 47-29351, Japanese Patent Application Laid-Open Publication No. 53-135959). Although they unlikely precipitate as crystals at low temperatures due to their pour point of -47.5°C as described above, they are not sufficient in insulation properties in particular in a low temperature range of 0°C or lower due to their high viscosity.

The melting points of 1-phenyl-1-methylphenylethane are +39.5°C for o-isomer, -40°C or lower for m-isomer and -12°C for p-isomer. When 1-phenyl-1-methylphenylethane is produced from styrene and toluene using a zeolite catalyst for example as described in Example 1 of Japanese Patent Application Laid-Open Publication 2003-119159, the production rate of the o-isomer would be around 1 percent. Therefore, the isomer mixture is assumed to have a low melting point. Furthermore, the mixture is high in hydrogen gas absorbability and breakdown voltage and thus is an electrical insulating oil with excellent low temperature properties.

While diphenylmethane and 1,2-diphenylethane are low in viscosity and high in gas absorbability and breakdown voltage, they have not been used because of their high melting points, such as +25°C and +51.2°C. However, it has been surprisingly found out that addition of at least one or more component selected from 1-phenyl-1-methylphenylethane, 1-phenyl-1-xylylethane, 1-phenyl-1-ethylphenylethane and benzyltoluene to 1,1-diphenylethane, followed by addition of diphenylmethane or 1,2-diphenylethane in a given amount can improve the breakdown voltage of the resulting electrical insulating oil composition and also can restrain the crystal precipitation thereof.

The electrical insulating oil composition of the present invention contains 1,1-diphenylethane as Component [A] in an amount of 30 to 70 percent by mass on the basis of the total mass of the electric insulating composition. A 1,1-diphenylethane content of less than 30 percent by mass increases the relative amount of Component [B], resulting in a composition likely precipitating as crystals. A content of more than 70 percent by mass increases the amount of Component [A], resulting in a composition likely precipitating as crystals.

The electrical insulating oil composition of the present invention contains at least one or more components selected from 4 components that are (a) 1-phenyl-1-methylphenylethane, (b) 1-phenyl-1-xylylethane, (c) 1-phenyl-1-ethylphenylethane and (d) benzyltoluene as Component [B].

The total content of (a) to (d) of the electrical insulating oil composition of the present invention is from 30 to 70 percent by mass on the basis of the total mass of the electric insulating composition. A Component [B] content of less than 30 percent by mass increases the relative amount of Component [A], resulting in a composition likely precipitating as crystals. A content of more than 70 percent by mass increases the amount of Component [B], resulting in a composition likely precipitating as crystals.

The electrical insulating oil composition of the present invention contains 1,2-diphenylethane and/or diphenylmethane as Component [C].

When the electrical insulating oil composition of the present invention contains 1,2-diphenylethane, the content thereof is from 0.1 to 3 percent by mass, preferably 0.5 percent by mass or more and 2 percent by mass or less on the basis of the total mass of the electric insulating composition. When the electrical insulating oil composition of the present invention contains diphenylmethane, the content thereof is from 0.1 to 13 percent by mass, preferably 0.5 percent by mass or more and 10 percent by mass or less, on the basis of the total mass of the electric insulating composition. If the content of 1,2-diphenylethane and/or diphenylmethane is less than the above lower limit, it would be less effective in restraining the resulting composition from precipitating as crystals at low temperatures. If the content is more than the upper limit, the resulting composition would likely precipitate as crystals caused by 1,2-diphenylethane or diphenylmethane having a high melting point.

The higher the viscosity of the electrical insulating oil, the more unlikely the oil circulates in a capacitor (convection) and thus the more unlikely the heat generated by discharge is removed. While the lower viscosity is preferred, among the diarylalkanes that are high in breakdown voltage, diphenylmethane that is smallest in molecular weight has a 40°C kinematic viscosity of 2.1 $mm^2/s$. While a mixture of 1-phenyl-1-xylylethane and 1-phenyl-1-phenylethylethane has a 40°C kinematic viscosity of about 5.0 $mm^2/s$, it has a kinematic viscosity of higher than 2000 $mm^2/s$ at -50°C, which is associated with difficulty in measuring the breakdown voltage. That is, a mixture of 1-phenyl-1-xylylethane and 1-phenyl-1-phenylethylethane does not precipitate as crystalline at -50°C but cannot be used under this temperature conditions. Therefore, the 40°C kinematic viscosity is preferably lower than 5.0 $mm^2/s$ which is the 40°C kinematic viscosity of the mixture of 1-phenyl-1-xylylethane and 1-phenyl-1-phenylethylethane. The 40°C kinematic viscosity and -50°C kinematic viscosity vary on the viscosity indexes of compounds, but if the compounds are diarylalkanes, they would not have a large difference therebetween.

Since the above-mentioned benzyltoluene and dibenzyltoluene are produced by reacting benzyl chloride with toluene, the resulting electrical insulating oil contains a considerable amount of chlorine, and it has been known that chlorine degrades the properties of the insulating oil. Therefore, the chlorine content of the electrical insulating oil is preferably less than 50 mass ppm, more preferably 10 mass ppm or less.

The electrical insulating oil is enhanced in dielectric dissipation factor due to the presence of water or polar substances, but would be poor in insulation properties if the dielectric dissipation factor is enhanced and thus degraded in properties of an electrical insulating oil. In order to avoid the degradation of the properties, removal of water and polar substance by contacting the oil with an activated earth can lower the dielectric dissipation factor and thus improve the properties. No particular limitation is imposed on the activated earth. Although no particular limitation is imposed on the shape of the activated earth, it is preferably a molded shape from the practical viewpoint. Since chlorines cannot be always removed with an activated earth, an epoxy compound is added as a trapping agent of hydrogen chloride. As the epoxy compound is removed to some extent by being contacted with an activated earth, it is desirously added after the electrical insulating oil is treated with an activated earth.

Examples of the epoxy compound include alicyclic epoxy compounds such as 3,4-epoxycyclohexylmethyl-3,4-epoxycyclohexane carboxylate, vinylcyclohexene diepoxide and 3,4-epoxy-6-methylcyclohexylmethyl(3,4-epoxy-6-methylhexane)carboxylate and bisphenol-A diglycidyl ether type epoxy compounds such as phenol novolac type epoxy compounds and ortho-cresol novolac epoxy compounds. The epoxy compound is added in an amount of 0.01 to 1.0 percent by mass, preferably 0.3 to 0.8 percent by mass on the basis of the total mass of the electric insulating composition. If the content is less than 0.01 percent by mass, the epoxy compound is less effective in dispersing the discharge energy. If the content is more than 1.0 percent by mass, the resulting insulating oil would be poor in electric characteristics and thus would be dielectric loss in a capacitor and generate heat, thereby degrading the properties of the capacitor. Contact of the insulating oil with an activated earth after addition of an epoxy compound cannot provide an effect as balanced with the amount of addition.

The electrical insulating oil composition of the present invention is useful as an impregnation oil of oil-impregnated electric devices, in particular as a capacitor oil. In more particular, the composition is suitable for impregnating an oil-impregnated electric devices containing a plastic film in at least a part of an insulating material or dielectric material, preferably oil-impregnated capacitors.

Examples of the plastic film include polyester and polyvinylidene fluoride and polyolefin films such as polypropylene and polyethylene, among which polyolefin films are suitable. A polypropylene film is particularly preferred.

An oil-impregnated capacitor suitable for the present invention is produced by winding a conductor formed of metal foil such as aluminum together with the above-described plastic film as insulating material or dielectric material and if necessary also other materials such as an insulating paper, followed by impregnation with an insulating oil by a conventional method. Alternatively, an oil-impregnated capacitor suitable for the present invention is also produced by forming a metalized plastic film by depositing a metal conductor layer of aluminum or zinc on the above-described plastic film as an insulating material or dielectric material and winding the film if necessary together with a plastic film or insulating paper, followed by impregnation with an insulating oil by a conventional method.

**Examples**

The present invention will be described in more detail with the following examples but is not limited thereto.

(Example 1)

A mixed oil was prepared to comprise 67 percent by mass of 1,1-diphenylethane, 30 percent by mass of benzyltoluene, 2 percent by mass of 1,2-diphenylethane and 1 percent by mass of diphenylmethane, and subjected to Experimental Examples A and B described below. The results are set forth in Table 1.

The benzyltoluene used in this examples was an isomer mixture comprising 4 percent by mass of o-isomer, 59 percent by mass of m-isomer and 37 percent by mass of p-isomer, produced in accordance with Reference Production Example of Japanese Patent Publication No. 8-8008.

(Example 2)

A mixed oil was prepared to comprise 69 percent by mass of 1,1-diphenylethane, 24 percent by mass of 1-phenyl-1-xylylethane, 6 percent by mass of 1-phenyl-1-phenylethylethane, 1 percent by mass of 1,2-diphenylethane and subjected to Experimental Examples A and B described below. The results are set forth in Table 1.

(Example 3)

A mixed oil was prepared to comprise 54 percent by mass of 1,1-diphenylethane, 36 percent by mass of 1-phenyl-1-xylylethane, 9 percent by mass of 1-phenyl-1-phenylethylethane and 1 percent by mass of 1,2-diphenylethane and subjected to Experimental Examples A and B described below. The results are set forth in Table 1.

(Example 4)

A mixed oil was prepared to comprise 67 percent by mass of 1,1-diphenylethane, 30 percent by mass of 1-phenyl-1-methylphenylethane, 1 percent by mass of diphenylmethane and 2 percent by mass of 1,2-diphenylethane and subjected to Experimental Example A described below. The results are set forth in Table 1.

The 1-phenyl-1-methylphenylethane used in this examples was an isomer mixture comprising 1 percent by mass of o-isomer, 11 percent by mass of m-isomer and 88 percent by mass of p-isomer produced in accordance with Example 1 of Japanese Patent Application Laid-Open Publication No. 2003-119159 wherein the raw material, cumene was replaced with toluene and the reaction temperature was changed to 200°C.

(Example 5)

A mixed oil was prepared to comprise 60 percent by mass of 1,1-diphenylethane, 24 percent by mass of 1-phenyl-1-xylylethane, 6 percent by mass of 1-phenyl-1-phenylethylethane and 10 percent by mass of diphenylmethane and subjected to Experimental Example A described below. The results are set forth in Table 1.

(Example 6)

A mixed oil was prepared to comprise 59 percent by mass of 1,1-diphenylethane, 32 percent by mass of 1-phenyl-1-methylphenylethane and 9 percent by mass of diphenylmethane and subjected to Experimental Example A described below. The results are set forth in Table 1. The 1-phenyl-1-methylphenylethane used in this example was the same as that of Example 4.

(Example 7)

A mixed oil was prepared to comprise 30 percent by mass of 1,1,-diphenylethane, 69 percent by mass of 1-phenyl-1-methylphenylethane and 1 percent by mass of 1,2-diphenylethane and subjected to Experimental Example A described below. The results are set forth in Table 1. The 1-phenyl-1-methylphenylethane used in this example was the same as that of Example 4.

(Example 8)

A mixed oil was prepared to comprise 58 percent by mass of 1,1-diphenylethane, 39 percent by mass of 1-phenyl-1-methylphenylethane, 2 percent by mass of 1,2-diphenylethane and 1 percent by mass of diphenylmethane and subjected to Experimental Examples A and B described below. The results are set forth in Table 1. The 1-phenyl-1-methylphenylethane used in this example was the same as that of Example 4.

(Example 9)

A mixed oil was prepared to comprise 49 percent by mass of 1,1-diphenylethane, 49 percent by mass of 1-phenyl-1-methylphenylethane, 1 percent by mass of 1,2-diphenylethane and 1 percent by mass of diphenylmethane and subjected to Experimental Examples A and B described below. The results are set forth in Table 1. The 1-phenyl-1-methylphenylethane used in this example was the same as that of Example 4.

(Example 10)

A mixed oil was prepared to comprise 49 percent by mass of 1,1-diphenylethane, 49 percent by mass of 1-phenyl-1-methylphenylethane, 1 percent by mass of 1,2-diphenylethane and 1 percent by mass of diphenylmethane and subjected to Experimental Examples A and B described below. The results are set forth in Table 1.
The 1-phenyl-1-methylphenylethane used in this example was an isomer mixture comprising 1 percent by mass of o-isomer, 52 percent by mass of m-isomer and 47 percent by mass of p-isomer produced in accordance with Example 1 of Japanese Patent Application Laid-Open Publication No. 2003-119159 wherein the raw material, cumene was replaced with toluene and the reaction temperature was changed to 260°C.

(Example 11)

A mixed oil was prepared to comprise 58 percent by mass of 1,1-diphenylethane, 39 percent by mass of benzyltoluene, 2 percent by mass of 1,2-diphenylethane and 1 percent by mass of diphenylmethane and subjected to Experimental Examples A and B described below. The results are set forth in Table 1.
The benzyltoluene used in this example was an isomer mixture comprising 49 percent by mass of o-isomer, 7 percent by mass of m-isomer and 44 percent by mass of p-isomer produced by a method described in Japanese Patent Application Laid-Open Publication No. 60-87231.

(Example 12)

A mixed oil was prepared to comprise 58 percent by mass of 1,1-diphenylethane, 39 percent by mass of benzyltoluene, 2 percent by mass of 1,2-diphenylethane and 1 percent by mass of diphenylmethane and subjected to Experimental Examples A and B described below. The results are set forth in Table 1. The benzyltoluene used in this example was the same as that used in Example 1.

(Example 13)

A mixed oil was prepared to comprise 39 percent by mass of 1,1-diphenylethane, 59 percent by mass of benzyltoluene, 1 percent by mass of 1,2-diphenylethane and 1 percent by mass of diphenylmethane and subjected to Experimental Examples A and B described below. The results are set forth in Table 1. The benzyltoluene used in this example was the same as that used in Example 1.

(Example 14)

A mixed oil was prepared to comprise 57 percent by mass of 1,1-diphenylethane, 30 percent by mass of benzyltoluene and 13 percent by mass of diphenylmethane and subjected to Experimental Example A described below. The results are set forth in Table 1. The benzyltoluene used in this example was the same as that used in Example 1.

(Example 15)

A mixed oil was prepared to comprise 54 percent by mass of 1,1-diphenylethane, 36 percent by mass of 1-phenyl-1-methylphenylethane and 10 percent by mass of diphenylmethane and subjected to Experimental Examples A and B described below. The results are set forth in Table 1. The 1-phenyl-1-methylphenylethane used in this example was the same as that used in Example 4.

(Example 16)

A mixed oil was prepared to comprise 69.8 percent by mass of 1,1-diphenylethane, 30 percent by mass of 1-phenyl-1-methylphenylethane, 0.1 percent by mass of diphenylmethane and 0.1 percent by mass of 1,2-diphenylethane and subjected to Experimental Example A described below. The results are set forth in Table 1. The 1-phenyl-1-methylphenylethane used in this example was the same as that used in Example 4.

(Comparative Example 1)

A mixed oil was prepared to comprise 70 percent by mass of 1,1-diphenylethane and 30 percent by mass of 1-phenyl-1-methylphenylethane and subjected to Experimental Example A described below. The results are set forth in Table 1. The 1-phenyl-1-methylphenylethane used in this example was the same as that used in Example 4.

(Comparative Example 2)

A mixed oil was prepared to comprise 70 percent by mass of 1,1-diphenylethane and 30 percent by mass of benzyltoluene and subjected to Experimental Example A and B described below. The results are set forth in Table 1. The benzyltoluene used in this example was the same as that used in Example 1.
The oil precipitated as crystal after 1030 hours of Experimental Example A, but the breakdown voltage of the oil was able to be measured as it took about 200 hours till Experimental Example B was completed.

(Comparative Example 3)

A mixed oil was prepared to comprise 80 percent by mass of 1-phenyl-1-xylylethane and 20 percent by mass of 1-phenyl-1-phenylethylethane and subjected to Experimental Examples A and B described below. The results are set forth in Table 1.

(Comparative Example 4)

Experimental Examples A and B described below were carried out using 1,1-diphenylethane. The results are set forth in Table 1.

(Comparative Example 5)

A mixed oil was prepared to comprise 20 percent by mass of 1,1-diphenylethane and 80 percent by mass of benzyltoluene and subjected to Experimental Example A described below. The results are set forth in Table 1. The benzyltoluene used in this example was the same as that used in Example 1.

(Comparative Example 6)

A mixed oil was prepared to comprise 80 percent by mass of 1,1-diphenylethane, 8 percent by mass of 1-phenyl-1-xylylethane, 2 percent by mass of 1-phenyl-1-phenylethylethane and 10 percent by mass of benzyltoluene and subjected to Experimental Example A described below. The results are set forth in Table 1. The benzyltoluene used in this example was the same as that used in Example 1.

(Comparative Example 7)

A mixed oil was prepared to comprise 80 percent by mass of benzyltoluene and 20 percent by mass of dibenzyltoluene and subjected to Experimental Examples A and B described below. The results are set forth in Table 1.
The oil precipitated as crystal after 1030 hours of Experimental Example A, but the breakdown voltage of the oil was able to be measured as it took about 200 hours till Experimental Example B was completed.

(Comparative Example 8)

A mixed oil was prepared to comprise 20 percent by mass of 1,1-diphenylethane and 80 percent by mass of 1-phenyl-1-methylphenylethane and subjected to Experimental Example A described below. The results are set forth in Table 1. The 1-phenyl-1-methylphenylethane used in this example was the same as that used in Example 4.

(Comparative Example 9)

A mixed oil was prepared to comprise 20 percent by mass of 1,1-diphenylethane, 64 percent by mass of 1-phenyl-1-xylylethane and 16 percent by mass of 1-phenyl-1-phenylethylethane and subjected to Experimental Example A described below. The results are set forth in Table 1.

(Comparative Example 10)

A mixed oil was prepared to comprise 30 percent by mass of 1,1-diphenylethane, 56 percent by mass of 1-phenyl-1-xylylethane and 14 percent by mass of 1-phenyl-1-phenylethylethane and subjected to Experimental Example A described below. The results are set forth in Table 1.

(Comparative Example 11)

An oil was prepared by adding 50 mass ppm of diphenylmethane chloride as a chlorine compound to 1,1-diphenylethane and subjected to Experimental Examples A and B described below. The results are set forth in Table 1.

(Comparative Example 12)

A mixed oil was prepared to comprise 67 percent by mass of 1,1-diphenylethane, 30 percent by mass of benzyltoluene and 3 percent by mass of 1,2-diphenylethane and subjected to Experimental Example A described below. The results are set forth in Table 1. The benzyltoluene used in this example was the same as that used in Example 1.

(Comparative Example 13)

A mixed oil was prepared to comprise 55 percent by mass of 1,1-diphenylethane, 30 percent by mass of benzyltoluene and 15 percent by mass of diphenylmethane and subjected to Experimental Example A described below. The results are set forth in Table 1. The benzyltoluene used in this example was the same as that used in Example 1.

[Experiment A] (Crystallization experiment at -50°C)

Concerning the relationship of temperature and crystallization, desirously, an insulating oil composition does not precipitate as crystals until the lowest acceptable temperature of -50°C reached in order to maintain the properties of a capacitor. In order to confirm the crystal precipitation of the insulating oil compositions, the oils of Examples 1 to 16 and Comparative Examples 1 to 13 were each put into a 100 ml sample bottle, left in a low temperature thermostatic bath, the temperature of which was then kept for 1030 hours and thereafter whether crystals precipitated or not was visually observed. The results are set forth in Table 1. "Good" denotes a state where the oil had transparency and no crystal precipitation was observed in the oil while "Bad" denotes a state where the oil had no transparency and was fluidized although it partially precipitated as crystals or completely precipitated as crystals and solidified as the whole. The insulating oil compositions of the present invention were not solidified even at -50°C or lower and thus can maintain the properties of a capacitor until the lowest acceptable temperature reaches.

[Experiment B] (Evaluation of electrical insulating oil composition using a model capacitor)

The capacitor used in this experiment was as follows. The solid insulating material used herein was a simultaneously biaxially stretched polypropylene film of easy-impregnation type that was manufactured by Shin-Etsu Film Co., Ltd. through a tubular method.
Two sheet of film of 14 $\mu$m (micrometer method) were wound together with an electrode of aluminum foil to produce a capacitor element of 0.3 to 0.4 $\mu$F in electrostatic capacity, which was then put in an tin can. The can was made flexible so as to compensate sufficiently the shrinkage of an insulating oil at low temperatures. The end portion of the electrode was not folded and left in the state as slit.
The can-type capacitor thus prepared was subjected to vacuum drying in a conventional manner, and under the same vacuum condition, it was impregnated with an insulating oil, followed by sealing. The capacitor was then subjected to heat treatment at a maximum temperature of 80°C for two days and nights in order to maintain the impregnation uniformly and stably. After leaving it to stand at room temperature for 5 days or longer, the capacitor was applied with AC 1400 V (corresponding to 50 V/$\mu$) in a thermostatic bath for 16 hours and then was used for an experiment.
Two sheets of polypropylene film of 14 $\mu$m thick were laminated to be used as a dielectric material, and wound and laminated together with an electrode of aluminum foil in accordance with a conventional manner thereby producing a model capacitor for oil-impregnation.
This capacitor was impregnated with each mixed oil under vacuum to produce an oil-impregnated capacitor with a capacitance of 0.26 $\mu$F. Before impregnation, each of the electrical insulating oil compositions was pre-treated with an activated earth. That is, an activated earth type NSR, manufactured by MIZUSAWA INDUSTRIAL CHEMICALS, LTD. was added in an amount of 3 percent by mass to each of the electrical insulating oil compositions and stirred at a liquid temperature of 25°C for 30 minutes and then filtered. After filtration, 0.65 percent by mass of a chlorine trapping agent that is an epoxy compound (alicyclic epoxide; product name: CELLOXIDE 2021P manufactured by Daicel Corporation) was added and used for impregnation.

Thereafter, the oil-impregnated capacitors were applied with an alternating voltage at a predetermined temperature by a predetermined method to obtain the breakdown voltage from the voltage and time at which the capacitor had insulation breakdown in accordance with the following formula (1). The predetermined method for applying voltage is a method wherein an applied voltage is continuously raised from a potential gradient of 50 v/μm at a rate of 10v/μm every 24 hours.

$$\mathtt{Breakdown\ voltage\ (v/\mu m)=V+S\times(T/1440)\quad(1)}$$

wherein V: applied voltage (v/μm) at insulation breakdown
S: raised voltage (v/μm) every 24 hours
T: time period till insulation breakdown occurs after raising applied voltage (minute)

[Table 1]

| | Electrical Insulating Oil Composition | | | | | | | | | Experiment A | Experiment B (breakdown voltage, V/$\mu$m) | | | | 40°C kinematic viscosity mm$^2$/s |
|---|---|---|---|---|---|---|---|---|---|---|---|---|---|---|---|
| | 1,1-DPE | PTE | PXE | PEPE | BT | 1,2-DPE | DPM | DBT | Chlorine content | Crystal Precipitation | -50°C | -30°C | 30°C | 80°C. | |
| Example 1 | 67 | 0 | 0 | 0 | 30 | 2 | 1 | 0 | 0 | good | 97 | 111 | 150 | 166 | 2.7 |
| Example 2 | 69 | 0 | 24 | 6 | 0 | 1 | 0 | 0 | 0 | good | 91 | 100 | 135 | 154 | 3.2 |
| Example 3 | 54 | 0 | 36 | 9 | 0 | 1 | 0 | 0 | 0 | good | 92 | 102 | 137 | 158 | 3.5 |
| Example 4 | 67 | 30 | 0 | 0 | 0 | 2 | 1 | 0 | 0 | good | - | - | - | - | 2.9 |
| Example 5 | 60 | 0 | 24 | 6 | 0 | 0 | 10 | 0 | 0 | good | - | - | - | - | 3.1 |
| Example 6 | 59 | 32 | 0 | 0 | 0 | 0 | 9 | 0 | 0 | good | - | - | - | - | 2.8 |
| Example 7 | 30 | 69 | 0 | 0 | 0 | 1 | 0 | 0 | 0 | good | - | - | - | - | 3.0 |
| Example 8 | 58 | 39 | 0 | 0 | 0 | 2 | 1 | 0 | 0 | good | 95 | 116 | 140 | 161 | 2.9 |
| Example 9 | 49 | 49 | 0 | 0 | 0 | 1 | 1 | 0 | 0 | good | 99 | 113 | 142 | 163 | 2.9 |
| Example 10 | 49 | 49 | 0 | 0 | 0 | 1 | 1 | 0 | 0 | good | 93 | 110 | 141 | 161 | 2.9 |
| Example 11 | 58 | 0 | 0 | 0 | 39 | 2 | 1 | 0 | 0 | good | 102 | 120 | 138 | 164 | 2.7 |
| Example 12 | 58 | 0 | 0 | 0 | 39 | 2 | 1 | 0 | 0 | good | 100 | 117 | 148 | 169 | 2.7 |
| Example 13 | 39 | 0 | 0 | 0 | 59 | 1 | 1 | 0 | 0 | good | 100 | 115 | 148 | 165 | 2.6 |
| Example 14 | 57 | 0 | 0 | 0 | 30 | 0 | 13 | 0 | 0 | good | - | - | - | - | 2.6 |
| Example 15 | 54 | 36 | 0 | 0 | 0 | 0 | 10 | 0 | 0 | good | 102 | 121 | 147 | 167 | 2.8 |
| Example 16 | 69.8 | 30 | 0 | 0 | 0 | 0 | 0.1 | 0.1 | 0 | good | - | - | - | - | 2.9 |
| Comparative Example 1 | 70 | 30 | 0 | 0 | 0 | 0 | 0 | 0 | 0 | bad | - | - | - | - | 2.9 |
| Comparative Example 2 | 70 | 0 | 0 | 0 | 30 | 0 | 0 | 0 | 0 | bad | 80 | 109 | 143 | 163 | 2.7 |
| Comparative Example 3 | 0 | 0 | 80 | 20 | 0 | 0 | 0 | 0 | 0 | bad | - | 89 | 121 | 151 | 5.0 |
| Comparative Example 4 | 100 | 0 | 0 | 0 | 0 | 0 | 0 | 0 | 0 | bad | - | - | - | 158 | 2.8 |

| | Electrical Insulating Oil Composition | | | | | | | | | Experiment A | Experiment B (breakdown voltage, V/$\mu$m) | | | | 40°C kinematic viscosity mm$^2$/s |
|---|---|---|---|---|---|---|---|---|---|---|---|---|---|---|---|
| | 1,1-DPE | PTE | PXE | PEPE | BT | 1,2-DPE | DPM | DBT | Chlorine content | Crystal Precipitation | -50°C | -30°C | 30°C | 80°C. | |
| Comparative Example 5 | 20 | 0 | 0 | 0 | 80 | 0 | 0 | 0 | 0 | bad | - | - | - | - | 2.6 |
| Comparative Example 6 | 80 | 0 | 8 | 0 | 10 | 0 | 0 | 0 | 0 | bad | - | - | - | - | 2.9 |
| Comparative EXample 7 | 0 | 0 | 0 | 0 | 80 | 0 | 0 | 20 | 0 | bad | 88 | 91 | 143 | 163 | 3.6 |
| Comparative Example 8 | 20 | 80 | 0 | 0 | 0 | 0 | 0 | 0 | 0 | bad | - | - | - | - | 3.1 |
| Comparative Example 9 | 20 | 0 | 64 | 16 | 0 | 0 | 0 | 0 | 0 | bad | - | - | - | - | 4.2 |
| Comparative Example 10 | 30 | 0 | 56 | 14 | 0 | 0 | 0 | 0 | 0 | bad | - | - | - | - | 4.0 |
| Comparative Example 11 | 100 | 0 | 0 | 0 | 0 | 0 | 0 | 0 | 50 | bad | - | - | - | 130 | 2.8 |
| Comparative Example 12 | 67 | 0 | 0 | 0 | 30 | 3 | 0 | 0 | 0 | bad | - | - | - | - | 2.7 |
| Comparative Example 13 | 55 | 0 | 0 | 0 | 30 | 0 | 15 | 0 | 0 | bad | - | - | - | - | 2.6 |

EP 2 720 232 A1

In Table 1, 1,1-DPE denotes 1,1-diphenylethane, PTE denotes 1-phenyl-1-methylphenylethane, PXE denotes 1-phenyl-1-xylylethane, PEPE denotes 1-phenyl-1-phenylethylethane, BT denotes benzyltoluene, 1,2-DPE denotes 1,2-diphenylethane, DPM denotes diphenylmethane and DBT denotes dibenzyltoluene.

As apparent from Table 1, the electrical insulating oil compositions of the present invention (Example 1 to 16) were found to maintain the breakdown voltage at a high level and not to precipitate as crystals at -50°C.

Industrial Applicability

The electrical insulating oil composition of the present invention is excellent in low temperature properties and significantly useful for industrial purposes.

**Claims**

1. An electrical insulating oil composition comprising:

   [A] 1, 1-diphenylethane in an amount of 30 to 70 percent by mass;
   [B] at least one or more component selected from 4 components that are (a) 1-phenyl-1-methylphenylethane, (b) 1-phenyl-1-xylylethane, (c) 1-phenyl-1-ethylphenylethane and (d) benzyltoluene in a total amount of 30 to 70 percent by mass; and
   [C] 1,2-diphenylethane in an amount of 0.1 to 2 percent by mass and/or diphenylmethane in an amount of 0.1 to 13 percent by mass.

2. An electrical insulating oil composition comprising:

   [A] 1,1-diphenylethane in an amount of 30 to 70 percent by mass;
   [B] at least one or more component selected from 3 components that are (a) 1-phenyl-1-methylphenylethane, (b) 1-phenyl-1-xylylethane and (c) 1-phenyl-1-ethylphenylethane in a total amount of 30 to 70 percent by mass; and
   [C] 1,2-diphenylethane in an amount of 0.1 to 2 percent by mass and/or diphenylmethane in an amount of 0.1 to 13 percent by mass.

3. An electrical insulating oil composition comprising:

   [A] 1, 1-diphenylethane in an amount of 30 to 70 percent by mass;
   [B] (a) 1-phenyl-1-methylphenylethane in an amount of 30 to 70 percent by mass; and
   [C] 1,2-diphenylethane in an amount of 0.1 to 2 percent by mass and/or diphenylmethane in an amount of 0.1 to 13 percent by mass.

4. The electrical insulating oil composition according to any one of claims 1 to 3 wherein the composition has a 40°C kinematic viscosity of 4.5 mm$^2$/s or lower.

5. The electrical insulating oil composition according to any one of claims 1 to 4 wherein the chlorine content is less than 50 mass ppm.

6. An electrical insulating oil composition wherein the composition according to any one of claims 1 to 5 is brought into contact with an activated earth, followed by addition of 0.01 to 1.0 percent by mass of an epoxy compound.

## INTERNATIONAL SEARCH REPORT

| | International application No. |
|---|---|
| | PCT/JP2012/063445 |

**A. CLASSIFICATION OF SUBJECT MATTER**
*H01B3/22*(2006.01)i, *C10M105/06*(2006.01)i, *C10M129/18*(2006.01)i, *C10N20/00*(2006.01)n, *C10N20/02*(2006.01)n, *C10N30/02*(2006.01)n, *C10N30/08*(2006.01)n, *C10N40/16*(2006.01)n

According to International Patent Classification (IPC) or to both national classification and IPC

**B. FIELDS SEARCHED**

Minimum documentation searched (classification system followed by classification symbols)
H01B3/22, C10M105/06, C10M129/18, C10N20/00, C10N20/02, C10N30/02, C10N30/08, C10N40/16

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X/A | JP 2011-501882 A (Cooper Technologies Co.), 13 January 2011 (13.01.2011), claim 18; paragraphs [0020] to [0023] & WO 2009/052410 A1 & EP 2210259 A1 & US 2009/0103239 A1 | 1,2,4-6/3 |
| A | JP 5-135992 A (Nissin Electric Co., Ltd.), 01 June 1993 (01.06.1993), paragraph [0011] (Family: none) | 1-6 |
| A | JP 5-28833 A (Nippon Petrochemicals Co., Ltd.), 05 February 1993 (05.02.1993), paragraph [0006] (Family: none) | 1-6 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 August, 2012 (03.08.12) | 14 August, 2012 (14.08.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

**Patent documents cited in the description**

- JP 7226332 A
- JP 60087231 A
- JP 57050708 A
- JP 47029351 A
- JP 53135959 A
- JP 2003119159 A
- JP 8008008 A